# EUROPEAN PATENT SPECIFICATION

(11) **EP 3 247 549 B1**
(45) Date of publication and mention of the grant of the patent: **19.08.2020**
(21) Application number: 16822738.7
(22) Date of filing: 15.11.2016
(51) Int. Cl.: B29C 57/04

(54) **APPARATUS AND METHOD FOR MAKING A BELL JOINT ON PLASTIC PIPES**
VORRICHTUNG UND VERFAHREN ZUR HERSTELLUNG EINER GLOCKENMUFFENVERBINDUNG AUF KUNSTSTOFFROHREN
APPAREIL ET PROCÉDÉ DE FABRICATION D'UN JOINT À EMBOÎTEMENT SUR DES TUYAUX EN PLASTIQUE

(30) Priority: 16.11.2015 IT UB20155617
(43) Date of publication of application: 29.11.2017
(73) Proprietor: Geberit International AG, 8645 Jona (CH)
(72) Inventor: TENANI, Filippo, 44030 Ruina (IT); PRÜGL, Rainer, 45100 Rovigo (IT)
(74) Representative: Cicconetti, Andrea
(86) International application number: PCT/IB2016/056852
(87) International publication number: WO 2017/085614

(56) References cited:
- EP-A2- 0 261 290
- WO-A1-2015/083102
- US-A- 3 893 794

## Description

The invention relates to apparatuses and methods for making joints on pipe ends in plastic material. More precisely, the invention relates to an apparatus and a method for making bell joints, in particular joints provided with annular seats for housing sealing gaskets, on pipe ends in plastic material by means of hot plastic deformation.

In the industry of pipes in plastic material, for example polyolefin plastics (polyethylene, polypropylene), the type of connection which provides for the joining of two successive pipes by means of sleeves or so-called "bell" joints is very widespread. Bell joint refers to the so-called "female" terminal portion of the pipe which has a widening of the cross section (outer and inner diameters) such as to form a sort of widened tubular sleeve able to receive and couple with the so-called "male" end, normal and not widened, of the next pipe. Inside the joint a groove or annular indentation is generally produced, intended to form a seat capable of housing a gasket that ensures the hydraulic seal between the two pipes of the piping, once the joining has been performed. The gasket can be a shaped gasket provided with a lip or a sealing ring, for example a circular section of the so-called "O-ring" type.

Bell joints are usually formed directly on the pipe end by means of hot plastic deformation of said end (belling process) by means of suitable forming systems.

There are forming systems that provide for the use of a metal buffer or mandrel axially inserted with force inside the pipe so as to form, through plastic deformation, the bell joint. The mandrel is provided with a plurality of inserts or sectors which can be radially expanded outwards to form the annular groove for the sealing gasket. After the forming of the groove the sectors are moved radially inwards to enable the free disengaging of the mandrel from the joint in axial direction.

The forming systems include external moulds to enclose the pipe end and exert an appropriate external pressure on the joint so as to form an external surface of the latter in co-operation with the inner mandrel.

Other known forming systems comprise, in addition to the external moulds, a blowing system able to feed inside the pipe air at such a pressure as to deform the plastic material and push the side wall of the pipe against the external moulds so as to form the bell joint.

There are moulding systems which provide, in addition to the mandrel and to the external moulds, a compressing flange having a cylindrical shape, mounted coaxially to the mandrel and axially movable in order to compress a terminal front portion of the pipe end during the forming of the joint. More precisely, the compressing flange pushes and compresses the plastic material of the terminal front portion against the forming walls of the external moulds and of the mandrel in order to make bell joints having an almost uniform and constant wall thickness. The compressing flange also enables annular seats with polygonal section (rectangular or trapezoidal) to be obtained, provided with "sharp" edges, that is edges having small radiuses of curvature, which prevent the escape from the seat, or in any case the varyingly accentuated shift, of the annular gasket during use of the pipe.

The compressing flange is generally integral with the mandrel, axially moved with the latter against the terminal front portion of the pipe.

Due to the vast extent of forces required for the hot forming of plastic pipes, in order to move the mandrel and the compressing flange, linear hydraulic actuators (cylinders or jacks) of adequate size are generally used, actuated along a working stroke that coincides with the working stroke of the mandrel and/or of the flange. These hydraulic actuators that operate at high pressures do not enable however the compression force to be adjusted and selected.

The working stroke of the compressing flange is determined generally as a result of a plurality of trials and tests, typically on the basis of the diameter and the thickness of the side wall of the bell joint to be made. The abovementioned stroke must not be in fact excessive in order to prevent the flange from compressing beyond measure the plastic material, which in this way could damage the expandable inserts of the mandrel and/or be crushed to the point of occupying the gaps between the forming walls and the same inserts, making the inner and outer surfaces of the bell joint unacceptable from a functional and/or aesthetic point of view. Vice versa, the stroke must not either be insufficient, that is such as to enable the flange to compress only partially the terminal front portion of the pipe end and therefore lead to an incomplete moulding of the latter. One disadvantage of the known forming apparatuses and methods lies therefore in the need to adjust with precision the stroke of the compressing flange for every different type of pipe (size, thickness, material) to be formed.

A further disadvantage of such forming apparatuses and methods lies in the fact that they do not enable account to be taken of the inevitable variations in thickness whereto the walls of the pipes of a same production batch are subject, in particular variations in the thickness at the end of the pipe on which the bell joint is to be made. In fact, if the thickness of the pipe wall, and therefore the amount of material at the terminal front portion, is larger than the nominal thickness, the stroke of the compressing flange may be excessive and cause inappropriate crushing of the material with the consequences disclosed above. Vice versa, if the wall thickness is smaller than the nominal one, the stroke of the compressing flange may be insufficient for compressing and forming in a precise and complete manner the end of the pipe.

The document WO 2015/083102 describes a forming apparatus set up to make by hot plastic deformation a bell joint on the end of a plastic pipe and comprising moulding means for externally enclosing the end and a mandrel movable along a longitudinal direction and insertable inside the end to form, in co-operation with the moulding means, the bell joint. The mandrel is provided with a plurality of sectors which can transversely and externally expand towards the moulding means to form on a side wall of the bell joint an annular seat for a sealing gasket. The forming apparatus also comprises a first compressing flange, movable along the longitudinal direction and cooperating with the moulding means in order to abut with and form the side wall at the annular seat, and a second compressing flange movable along the longitudinal direction, interposed between the first compressing flange and the mandrel and arranged in order to abut with and compress a terminal front portion of the bell joint so as to upset the plastic material against the moulding means, the first compressing flange and the sectors of the mandrel so as to form with precision the seat and the terminal front portion of the bell joint.

The document US 3893794 describes an apparatus for forming a joining cavity on the end of a thermoplastic material pipe, in which a shaping movement is carried out so that the formed end has a wall thickness which is at least equal to the thickness of the wall of the initial pipe. The apparatus comprises a mandrel, a mould in two parts, and a thrust member. An annular moulding chamber is produced which has a radial dimension which is at least equal to the thickness of the pipe wall to be formed.

An object of the present invention is to improve the known forming apparatuses and methods in order to make bell joints on plastic pipes, in particular joints provided with annular seats for sealing gaskets.

Another object is to provide a forming apparatus and method that allow the manufacture in a precise and effective manner of bell joints on the ends of pipes in plastic material, independently of variations in a wall thickness of said pipes with respect to a nominal value.

A further object is that of obtaining a forming apparatus and method which allow forming in an optimal manner a terminal front portion of the pipe end during the process of forming the bell joint, in particular of making annular seats for sealing gaskets which are precise and accurate both in their internal geometry and in their external profile.

A further object is to produce a forming apparatus having a simple, reliable and economical structure.

In a first aspect of the invention a forming apparatus is provided according to claim 1.

In a second aspect of the invention a forming method is provided according to claim 12. The forming apparatus of the invention, set up to make by means of hot plastic deformation a bell joint on an end of a pipe in plastic material, comprises moulding means for externally enclosing said end, a mandrel movable along a longitudinal direction parallel to a longitudinal axis of the pipe and insertable inside the end of the pipe to form in co-operation with the moulding means the bell joint and at least one compressing flange, movable along the longitudinal direction to abut with and compress an terminal front portion of the bell joint so as to upset the plastic material against the moulding means and the mandrel. The apparatus comprises driving means for moving the compressing flange along the longitudinal direction and force limiting means interposed between the driving means and the compressing flange to limit a compression or thrust force exerted by the driving means on the compressing flange during a compression of the terminal front portion of the bell joint.

In one embodiment, the force limiting means includes frame means attached to the compressing flange and force adjustment means interposed between the frame means and an operating end of the driving means. The force adjustment means is apt to rigidly connect the operating end to the frame means so as to move the compressing flange against the terminal front portion, when the compression force is smaller than an established and adjustable maximum compression force, or enable a related movement between the operating end and the frame means, so as to prevent the compressing flange from moving further along the longitudinal direction, when the compression force is greater than the maximum compression force. In this way, the force limiting means prevents the compressing flange from excessively compressing the plastic material, avoiding damaging inserts of the mandrel, arranged to form on the bell joint an annular seat for a gasket, and/or from pushing the plastic material to occupy the gaps between the forming walls of the moulding means and inserts, making the inner and outer surfaces of the bell joint not acceptable from a functional and/or aesthetic viewpoint.

In another embodiment, the force limiting means comprises first sensor means, interposed between the operating end of the driving means and the frame means, which support the compressing flange, and set up to detect the compression force exerted by the driving means and send a related signal to a control unit. The force limiting means comprises, moreover, second sensor means set up to detect a displacement and/or a speed of the operating end along the longitudinal direction and send a related signal to the control unit. The control unit is connected to the driving means and set up to stop the latter, and therefore the compressing flange, when the first sensor means detects a force equal to the maximum compression force and the second sensor means detects that the operating end is stopped.

The sensor means and the control unit enable to control with extreme precision the compression force exerted by the compressing flange on the plastic material, in particular up to a maximum compression force that prevents both crushing and excessive compressions of a terminal front portion of the bell joint and an incomplete or insufficient forming of the aforesaid terminal front portion and/or of an annular seat formed on the bell joint.

The forming method of the invention for making by means of hot plastic deformation a bell joint on one end of a pipe in plastic material, by means of a forming apparatus provided with moulding means, a mandrel and at least one compressing flange, provides for:
- inserting the pipe end, previously heated, inside the moulding means;
- closing the moulding means around the end of the pipe;
- inserting the mandrel, movable along a longitudinal direction, inside the end to form in co-operation with the moulding means the bell joint;
- moving the compressing flange along the longitudinal direction to abut with and compress a terminal front portion of the bell joint so as to upset the plastic material against the moulding means and the mandrel.

The compressing flange is moved so as to abut with and compress the terminal front portion with a compression force smaller than or equal to an established and adjustable maximum compression force.

Thanks to the forming apparatus and method of the invention it is therefore possible to make in a precise and regular manner bell joints on pipe ends in plastic material, independently of variations in a wall thickness of the abovementioned pipes with respect to a nominal value. This advantage is more evident in the case of forming bell joints having annular seats for sealing gaskets, in that it is possible to make precise and accurate seats both in their internal geometry and in their external profile.

The invention will be better understood and implemented with reference to the accompanying drawings, illustrating an exemplary and non-limiting embodiment thereof, in which:
- Figure 1 is a cross section of the forming apparatus of the invention associated with a pipe in plastic material for forming on one end of the latter a bell joint and in an operating position;
- Figure 2 is a cross section of the apparatus of Figure 1 in another operating position;
- Figure 3 is an enlarged detail of Figure 2 illustrating a compressing flange in abutment with a terminal front portion of the pipe;
- Figure 4 is an enlarged detail of Figure 2 partially illustrating force limiting means of the apparatus in an inactive condition;
- Figure 5 is a cross section of the apparatus of Figure 1 in a further operating position;
- Figure 6 is an enlarged detail of Figure 5 partially illustrating the force limiting means in an active condition;
- Figures 7 and 8 are respectively a front view and a perspective view of the driving means and of the force limiting means of the apparatus of Figure 1;
- Figure 9 is a partial and cross section of a variant of the forming apparatus of the invention;
- Figure 10 is a partial and cross section of another variant of the forming apparatus of the invention.

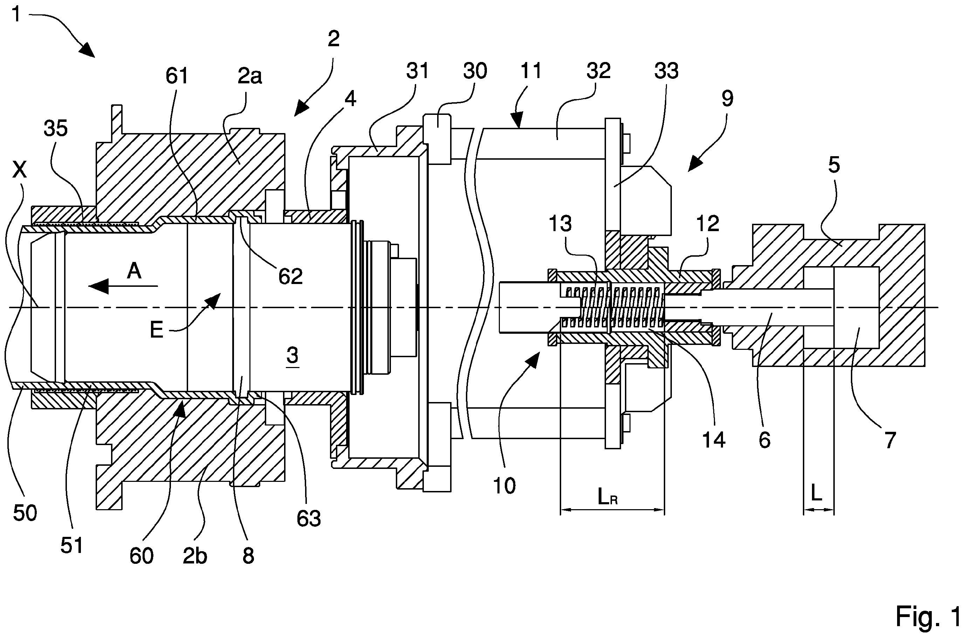

Referring to Figures 1 to 6, a forming apparatus 1 is illustrated, set up to make by means of hot plastic deformation a bell joint 60 on one end 51 of a pipe 50 in plastic material, for example a polyolefin plastic such as polyethylene. The apparatus 1 includes moulding means 2 apt to externally enclose the end 51 and a mandrel 3 that is movable along a longitudinal direction A, parallel to a longitudinal axis X of the pipe 50, and can be inserted inside the end 51 to form in co-operation with the moulding means 2 the bell joint 60.

The apparatus likewise includes at least one compressing flange 4 which is axially movable along the longitudinal direction A to abut with and compress an terminal front portion 63 of the bell joint 60, so as to press and upset the plastic material against the moulding means 2 and the mandrel 3.

The moulding means 2 comprises, for example, two half-moulds 2a, 2b, movable one in relation to the other during opening and closing in a transverse direction, in particular orthogonal, to the longitudinal axis X of the pipe 50. In a position of opening, the half-moulds 2a, 2b enable the end 51 of the pipe 50 to be formed to be introduced and positioned in the apparatus 1. In the position of closure (shown in the drawings) the half-moulds 2a, 2b enclose the end 51. The half-moulds 2a, 2b realize in the position of closure a first forming cavity intended to form with the mandrel 3 a conical portion and a cylindrical portion of the side wall 61 of the bell joint 60 and a second forming cavity intended to co-operate with the compressing flange 4 and the mandrel 3 to form the terminal front portion 63 of the bell joint 60.

Stop means 35 is attached to the moulding means 2 in order to abut with and lock an outer surface of the pipe 50 in the position of closure of said moulding means 2. The stop means 35, which comprises a cylindrical member in rubber or other similar material, ensures the stopping and the locking at least in the longitudinal direction of the pipe 50 during the insertion of the mandrel 3 and during the compression and the shaping of the plastic material performed by the compressing flange 4.

The apparatus includes driving means 5 for moving the compressing flange 4 along the longitudinal direction A and force limiting means 9 that is interposed between the driving means 5 and the compressing flange 4 and set up to limit a substantially axial compression or thrust force F which the driving means 5 exerts on the compressing flange 4 during a compression of the terminal front portion 63 of the end of the pipe 50.

More precisely, and as explained in greater detail in the continuation of the description, the force limiting means 9 is able to limit the compression force F exerted by the driving means 5 so that said force does not exceed a specified maximum compression force or thrust Fₘₐₓ, which can be adjusted and set according to operational needs.

In the embodiment illustrated, the force limiting means 9 comprises frame means 11 attached to, and supporting, the compressing flange 4 and connected to an operating end 6 of the driving means 5 via force adjustment means 10. The abovementioned force adjustment means 10 is therefore interposed between the frame means 11 and the operating end 6 and are set up to rigidly connect the operating end 6 to the frame means 11, so as to enable the movement of the compressing flange 4 against the terminal front portion 63, when the compression force F of the driving means 5 is smaller than an established and adjustable maximum compression force or thrust Fₘₐₓ. Vice versa, when the compression force F of the movement means 5 is greater than said maximum compression force Fₘₐₓ, the aforesaid force adjustment means 10 enables a related movement between the operating end 6 and the frame means 11 so as to prevent the compressing flange 4 from moving further along the longitudinal direction A and so compress further the terminal front portion 63.

The force adjustment means 10 comprises a supporting element 12, attached to the frame means 11, and elastic means 13 interposed between the supporting element 12 and the operating end 6. The elastic means 13 is able to exert on the operating end 6 an elastic reaction force Re that is equal to said maximum compression force Fₘₐₓ and is elastically yielding when the compression force F is greater than the elastic reaction force Re (i.e. greater than the maximum compression force Fₘₐₓ) so as to enable a related movement of the operating end 6 with respect to the supporting element 12.

The supporting element 12 is, for example, a cylindrical sleeve provided with an internal cavity 14, in particular a through cylindrical cavity, able to receive the elastic means 13. The elastic means 13 comprises, for example, at least one helical cylindrical spring acting in compression having a first terminal portion, restrained to the supporting element 12, and a second terminal portion which abuts the operating end 6 of the driving means 5 exerting on the latter the elastic reaction force Re.

The elastic reaction force Re is proportional to the length of compression of the helical spring 13. In the example illustrated, the spring 13 with a compression length L_{R} exerts an elastic reaction force Re equal to the established maximum compression force.

The force adjustment means 10 comprises adjustment means 15 that is connected to the supporting element 12 and movable in order to compress in an adjustable manner the elastic means 13 against the operating end 6 so as to vary the elastic reaction force Re, and therefore the maximum compression force Fₘₐₓ which can in this way be set and adjusted as required depending on the operating requirements.

In the example illustrated, the adjustment means 15 comprises a adjustment bushing which supports the elastic means 13 and is coupled to a first terminal portion 12a of the supporting element 12 opposite to the driving means 5. The adjustment bushing 15 can be moved with respect to the supporting element 12 along the longitudinal direction A so as to compress in an adjustable manner the elastic means 13 against the operating end 6 and in this way vary the value of the elastic reaction force Re, i.e. to adjust and set the value of the maximum compression force Fₘₐₓ which can act on the compressing flange 4.

The adjustment bushing 15 comprises, for example, an external threading that enables the progressive and adjustable screwing thereof inside the first terminal portion 12a, provided in turn with a corresponding internal threading.

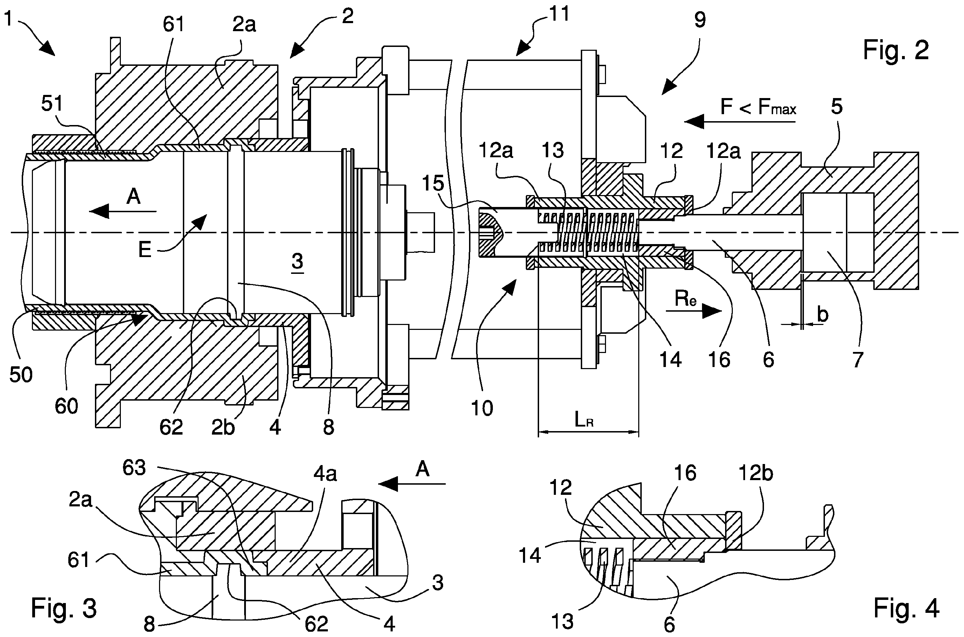

The force adjustment means 10 includes a further tubular bushing 16 attached, for example screwed, to the operating end 6 and apt to be abutted by the elastic means 13. In an inactive configuration of the force adjustment means 10, the further bushing 16 abuts a bottom wall of a second terminal portion 12b of the supporting element 2, opposite to the first terminal portion 12a (Figure 4). The further bushing 16 likewise prevents the detachment of the operating end 6 from the supporting element 12.

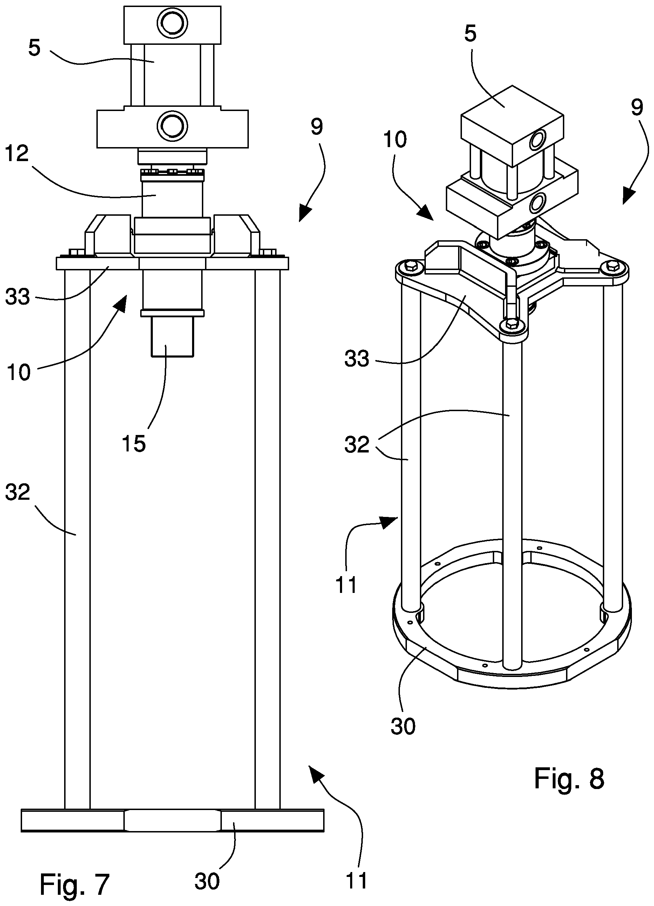

Referring in particular to Figures 7 and 8, the frame means 11 comprises, for example, a ring 30 attached by means of a further ring 31 to the compressing flange 4 and connected by means of a plurality of rods 32, for example four, to a support plate 33 whereto the supporting element 12 of the force adjustment means 10 is attached. The driving means 5 is in turn attached to further frame means of the forming apparatus 1, of known type and not illustrated in the drawings. The frame means 11 may also be slidably supported by the further frame means of the forming apparatus 1.

The driving means 5 comprises at least one linear actuator, for example and preferably a hydraulic cylinder, having a working stroke L and provided with the operating end 6. The latter is, for example, the outer portion 6 of the piston rod 7. In the case of a hydraulic cylinder, the piston rod is movable and connected to the force adjustment means 10 and more precisely screwed to the further bushing 16 of the latter.

In the embodiment of the forming apparatus 1 illustrated and described by way of an example, the mandrel 3 is provided with a plurality of sectors 8 that can transversely and externally expand, in particular radially outwards with respect to the longitudinal axis X towards the moulding means 2 between a retracted position (not shown) and an extended position E in order to form on the side wall 61 of the bell joint 60 an annular seat 62 for a sealing gasket.

The mandrel 3 is moved along the longitudinal direction A by further driving means of a known type and not illustrated in the drawings.

The compressing flange 4, which includes a cylindrical tubular member, is coaxial and slidable on the mandrel 3 and is provided with a shaped end 4a apt to form, in co-operation with the sectors 8 of the mandrel 3 and the moulding means 2 (in particular with the second forming cavity of the latter), the annular seat 62 and the terminal front portion 63 of the bell joint 60.

The functioning of the forming apparatus 1 of the invention for making a bell joint 60 on the end 51 of a pipe 50 of plastic material provides, in a first operational phase, for the positioning of the end 51 of the pipe 50, previously heated, inside the moulding means 2 placed in open position. In a second operational phase, the moulding means 2 is closed so as to enclose and lock the end 51, in particular by the stop means 35. In a third operational phase, the mandrel 3 is moved along the longitudinal direction A and forced inside the end 51 so as to widen the latter and partially form the bell joint 60.

In a fourth operational phase the sectors 8 of the mandrel 2 are widened outwards, radially in the direction of the moulding means 2 and up to the extended position E so as to form, at least partially, on the side wall 61 of the bell joint 60, the annular seat 62. More precisely, the expanding sectors 8 push and deform the related portion of side wall 61 (Figure 1).

In a fifth operational phase the compressing flange 4 is moved by the driving means 5 via the force limiting means 9 alongn the longitudinal direction A until abutting the terminal front portion 63 of the bell joint 60 (Figure 2).

The driving means 5 then exerts a compression force F on the compressing flange 4 whose value is a function of the resistance offered to the plastic material of the terminal front portion 63 to be pressed and upset against the moulding means 2 (second forming cavity), the sectors 8 of the mandrel 3 and an outer wall of the latter.

The driving means 5, in particular the piston 7 of the latter, is actuated along the working stroke L which enables moving of the compressing flange 4 and compressing and shaping of the terminal front portion 63 in an optimal manner, independently of variations in the thickness of the wall of the pipe 50, as will be explained in greater detail in the continuation of the description.

During the fifth operational phase with a value of the compression force F smaller than the established elastic reaction force Re exerted by the elastic means 13 of the force adjustment means 10 (that is, smaller than the maximum compression force Fₘₐₓ), the operating end 6 of the piston 7 of the driving means 5 is integral with and rigidly connected to the frame means 11 so as to move and push the compressing flange 4 along the longitudinal direction A and compress and upset the terminal front portion 63. In this phase the force limiting means 9 is in the inactive condition, the further bushing 16 of the force adjustment means 10 abutting with the second terminal portion 12a of the supporting element 12 (the elastic means 13 having compression length L_{R}).

In the example illustrated in the drawings, the compression exerted by the compressing flange 4 continues until the value of the compression force F exerted by the driving means 5 is counterbalanced by the elastic reaction force Re of the elastic means 13 (for example, for a value of the piston stroke 7 equal to L-b).

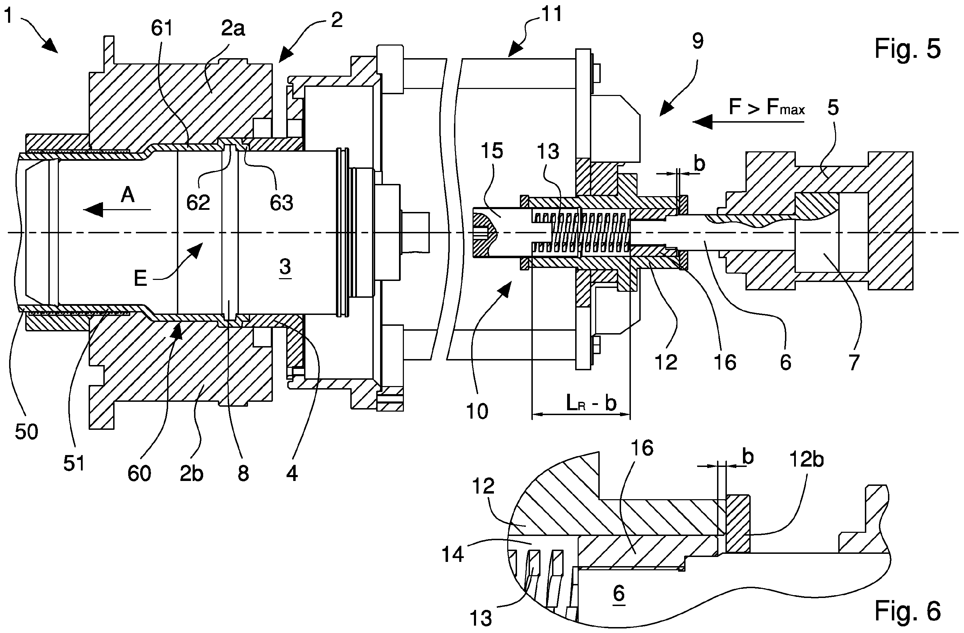

The force limiting means 10 then comes into operation (active condition) in a subsequent sixth operational phase (Figures 5 and 6). In fact, continuing in their stroke until performing the complete working stroke L, the driving means 5 exerts a compression force F progressively greater than the maximum compression force Fₘₐₓ (i.e. of the elastic reaction force Re) due to the increase in the resistance to compression and to shaping offered by the plastic material of the terminal front portion 63 of the pipe 50. The elastic means 13, when subjected to a compression force F greater than the elastic reaction force Re, yield and are compressed proportionally (for example by a length equal to b), enabling a related movement between the operating end 6 and the frame means 11 which prevents further movements of the compressing flange 4 along the longitudinal direction A, i.e. a further compression of the plastic material of the front compression portion 63. In this way, the force limiting means 9 prevents the compressing flange 4 from excessively compressing the plastic material, avoiding damaging the inserts 8 of the mandrel and/or pushing the plastic material to occupy the gaps between the forming walls and the inserts, making the inner and outer surfaces of the bell joint not acceptable from a functional and/or aesthetic viewpoint.

Note that the working stroke L of the driving means 5 can be selected so as to ensure the reaching of the established maximum compression force Fₘₐₓ, i.e. the intervention of the force limiting means 9 regardless of dimensional variations of the wall thickness of the pipe 50, both in the case where this thickness is greater than the nominal one (thus preventing crushing and excessive compressions of the terminal front portion 63) and in the case of thicknesses smaller than the nominal one (in this case avoiding the incomplete or insufficient forming of the terminal front portion 63 and/or of the annular seat 62).

Note also that by acting manually on the adjustment bushing 15 coupled to the supporting element 12 it is possible to compress in an adjustable manner the elastic means 13 against the operating end 6 of the driving means 5 to modify in a simple, fast and accurate manner the elastic reaction force Re, i.e. adjust and set the maximum compression force Fₘₐₓ required to be exerted on the terminal front portion 63 of the bell joint 60.

The value of the maximum compression force Fₘₐₓ is identified following preliminary tests and experiments and depends on a plurality of parameters including the type and composition of the plastic material with which the pipe 50 is made, wall thickness and diameter of the latter, temperature of heating of the end 51, etc.

The force limiting means 9 of the forming apparatus of the invention therefore enables adjustment and limiting in a precise and optimum manner of the compression force or compression F exerted by the compressing flange 4.

Note that the working stroke of the compressing flange 4 is therefore variable, being determined by the value of the maximum compression force Fₘₐₓ that can be adjusted, unlike known forming apparatuses and methods.

Once the bell joint 60 has been formed in a complete and regular manner, the sectors 8 of the mandrel 3 are retracted inside the same, then the mandrel 3 and the flange 4 are moved along the longitudinal direction A away from and disengaging from the pipe 50. The moulding means 2 is then opened to allow the extraction of the pipe 50 provided with bell joint 60.

The forming method of the invention for making by hot plastic deformation a bell joint 60 on the end 51 of a pipe 50 of plastic material, by means of a forming apparatus 1 provided with moulding means 2, a mandrel 3 and at least one compressing flange 3, provides for:
- inserting the end 51 of the pipe 50, previously heated, inside the moulding means 2;
- closing the moulding means 2 around the end 51;
- inserting the mandrel 3, movable along the longitudinal direction A, inside the end 51 to form in co-operation with the moulding means 2 the bell joint 60;
- moving the compressing flange 4 along the longitudinal direction A to abut with and compress a terminal front portion 63 of the bell joint 60 so as to upset the plastic material against the moulding means 2 and the mandrel 3;
the compressing flange 4 being moved so as to abut with and compress the terminal front portion 63 with a compression force F smaller than or equal to an established and adjustable maximum compression force Fₘₐₓ.

The method involves, moreover, forming on a side wall 61 of the bell joint 60 an annular seat 62 for a sealing gasket, in particular by means of a plurality of sectors 8 of the mandrel 3, which are transversely and externally expandable towards the moulding means 2 in an extended position E.

Thanks to the forming apparatus and method of the invention it is therefore possible to make in a precise and regular manner bell joints 60 on ends 51 of pipes 50 in plastic material, independently of variations in a wall thickness of the aforementioned pipes with respect to a nominal value. This advantage is more evident in the case of forming bell joints having annular seats for sealing gaskets, in that it is possible to make precise and accurate seats both in their internal geometry and in their external profile.

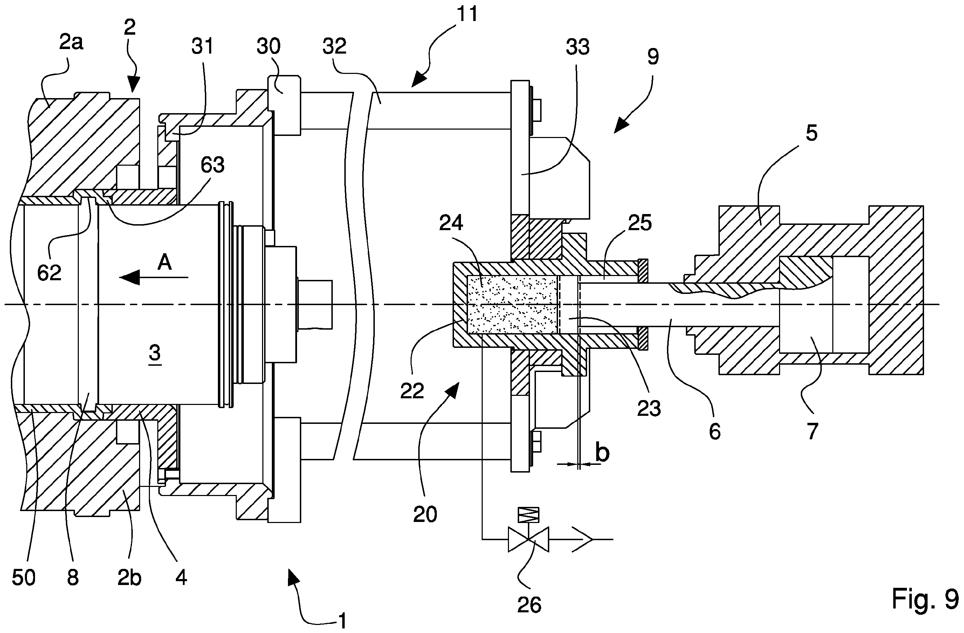

Figure 9 illustrates a variant of the forming apparatus of the invention which differs from the embodiment described above, due to the force adjustment means 20 of the force limiting means 9, the aforementioned force adjustment means 20 comprising in this case a cylinder 22 attached to the frame means 11 and containing a fluid, for example oil, and a corresponding piston 23 attached to the operating end 6 of the driving means 5 and sliding inside the cylinder 22 in which it defines a first chamber 24 and a second chamber 25 opposite one to the other. The first chamber 24, opposite to the operating end 6, is in flow connection with a valve 26 able to drain the abovementioned first chamber 24 so as to enable the free sliding of the piston 23 inside the cylinder 22, when the compression force F is greater than the maximum compression force Fₘₐₓ. More precisely, when the pressure inside the first chamber 24 reaches a predetermined value generated by the maximum compression force Fₘₐₓ, the valve is activated and opens into discharge. Since the piston 23 is now able to move inside the cylinder 22, the operating end 6 of the driving means 5 moves with respect to the frame means 11 (related movement) and in this way further movements of the compressing flange 4 along the longitudinal direction A and against the end front portion 63 are prevented. The valve 26 can be of the adjustable type in order to vary an opening pressure of the first chamber 24 in discharge, and therefore to modify and adjust the value of the maximum compression force Fₘₐₓ.

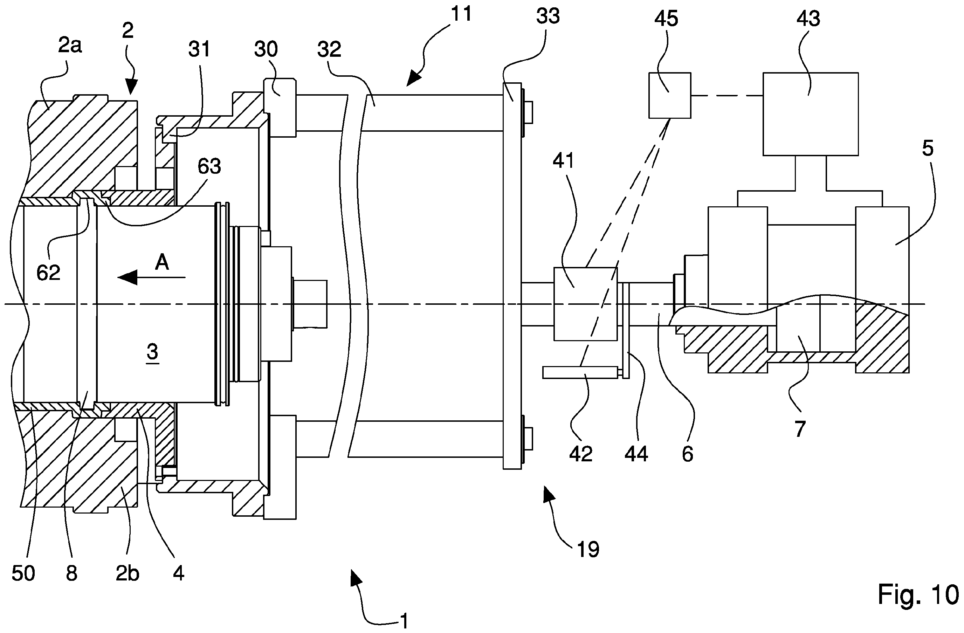

Referring to Figure 10, another variant is illustrated of the forming apparatus 1 of the invention which differs from the embodiment described above due to the force limiting means 19 which comprises first sensor means 41, interposed between the operating end 6 and the frame means 11 and set up to detect the compression force F exerted by the driving means 5 and send a related signal to a control unit 45 of the forming apparatus 1, and second sensor means 42 for detecting a movement and/or a speed of the operating end 6 along the longitudinal direction A and send a related signal to the control unit 45.

The control unit 45 is also connected to the driving means 5 and is set up to stop the latter, and therefore the compressing flange 4, when the first sensor means 41 detects a force equal to the maximum compression force Fₘₐₓ and the second sensor means 42 detects that the operating end 6 is stationary.

The first sensor means 41 comprises, in particular, an electronic load cell attached on one side to the operating end 6 and on the other side to the support plate 33 of the frame means 11 and able to measure with precision the axial force of thrust or compression exerted of the driving means 5.

The second sensor means 42 comprises a linear position transducer, for example a potentiometric or magnetostrictive or optical transducer, connected via a connection member 44 to the operating end 6 and set up to detect a movement, absolute or related, and/or a speed of the latter. The linear position transducer 42 can also be connected to the frame means 11.

In the illustrated embodiment the driving means 5 comprises a hydraulic cylinder fed by a supply unit 43 of known type and comprising a hydraulic pump and regulation valves. The supply unit 43 is connected to and controlled by the control unit 45.

The functioning of this variant of the forming apparatus 1 provides for in the fifth operational phase, in which the compressing flange 4 is moved by the driving means 5 along the longitudinal direction A to compress the terminal front portion 63 of the bell joint 60, the load cell 41 to detect the compression force F exerted by the hydraulic cylinder 5 and send a related signal to the control unit 45 and the linear position transducer 42 detects a movement (forward) along the longitudinal direction A and/or a speed other than zero of the operating end 6 and sends a related signal to the control unit 45.

The control unit 45 manages the supply unit 43 so that it feeds the hydraulic cylinder 5 so as to push the compressing flange 4 against the bell joint 60 until the load cell 41 detects a value of the compression force F greater than the value of the maximum predetermined compression force Fₘₐₓ and the linear position transducer 42 detects that the operating end 6, i.e. the compressing flange 4, is stationary.

At this point, the control unit 45 intervenes on the supply unit 43 so as to interrupt the supply of the hydraulic cylinder 5 or lock the piston 7 and prevent further movement thereof.

Note that thanks to the sensor means 41, 42 and to the control unit 45 it is possible to control with extreme precision the compression force F exerted by the compressing flange 4 on the plastic material, in particular reaching a maximum compression force Fₘₐₓ that prevents both crushing and excessive compressions of the terminal front portion 63 and incomplete or insufficient forming of the terminal front portion 63 and/or of the annular seat 62.

Note also that the control unit 45 enables the adjusting and setting in a simple and fast manner of the value of the maximum compression or thrust force Fₘₐₓ, determined following tests and experiments, and dependent on a plurality of parameters including type and composition of the plastic material with which the pipe 50 is made, wall thickness and diameter of the latter, heating temperature, etc.

In this way, during production it is possible to change the type and/or dimensions of the pipe to be formed with minimum interventions of replacement (mandrel, moulding means, compressing flange) and adjustment.

The forming apparatus 1 can comprise in a further embodiment, not illustrated in the drawings, a further compressing flange, substantially coaxial to the mandrel 3 and to the compressing flange 4 and also set up to abut with the terminal front portion 63 of the bell joint 60 so as to upset the plastic material against the moulding means 2 and the mandrel 3. The further compressing flange is moved along the longitudinal direction A in a separate and independent manner by further driving means provided with respective force limiting means, identical to those described above in the different variants and used for the means of driving of the compressing flange 4. In this way, also for the further compressing flange it is possible to control and limit a respective compression force by acting on the terminal front portion 63 during the forming of the bell joint 60, so as to prevent crushing and excessive compressions of the plastic material and/or an incomplete or insufficient forming of the aforementioned terminal front portion 63 and/or of the seat.

## Claims

1. Forming apparatus (1) to make by means of hot plastic deformation a bell joint (60) on an end (51) of a pipe (50) made of plastic material, comprising:
- moulding means (2) for externally enclosing said end (51);
- a mandrel (3) that is movable along a longitudinal direction (A) parallel to an axis (X) of said pipe (50) and that is insertable inside said end (51) to form in co-operation with said moulding means (2) said bell joint (60);
- at least one compressing flange (4) movable along said longitudinal direction (A) to abut with and compress a terminal front portion (63) of said bell joint (60) so as to upset the plastic material against said moulding means (2) and said mandrel (3);
- driving means (5) for moving said compressing flange (4) along said longitudinal direction (A);
**characterised in that** it comprises force limiting means (9; 19) which is interposed between said driving means (5) and said compressing flange (4) to limit a compression force (F) that is exerted by said driving means (5) on said compressing flange (4) during a compression of said terminal front portion (63).

2. Apparatus according to claim 1, wherein said force limiting means (9) comprises frame means (11) attached to said compressing flange (4) and force adjustment means (10; 20) interposed between said frame means (11) and an operating end (6) of said driving means (5), said force adjustment means (10; 20) being apt to rigidly connect said operating end (6) to said frame means (11) so as to move said compressing flange (4) against said terminal front portion (63) when said compression force (F) is smaller than an established and adjustable maximum compression force (Fₘₐₓ) or to enable a movement between said operating end (6) and said frame means (11), so as to prevent said compressing flange (4) from further moving along said longitudinal direction (A), when said compression force (F) is greater than said maximum compression force (Fₘₐₓ).

3. Apparatus according to claim 2, wherein said force adjustment means (10) comprises a supporting element (12) attached to said frame means (11) and elastic means (13) interposed between said supporting element (12) and said operating end (6), said elastic means (13) being arranged to exert on said operating end (6) an elastic reaction force (Re) that is equal to said maximum compression force (Fₘₐₓ) and yielding when said compression force (F) is greater than said elastic reaction force (Re) so as to enable a related movement of said operating end (6) with respect to said supporting element (12).

4. Apparatus according to claim 3, wherein said force adjustment means (10) comprises adjustment means (15) that is connected to said supporting element (12) and movable to compress in an adjustable manner said elastic means (13) against said operating end (6) so as to vary said elastic reaction force (Re) and therefore adjust and set said maximum compression force (Fₘₐₓ).

5. Apparatus according to claim 2, wherein said force adjustment means (20) comprises a cylinder (22) attached to said frame means (11) and containing a fluid and a corresponding piston (23) that is attached to said operating end (6) and defines in said cylinder (22) a first chamber (24) and a second chamber (25) that are opposite one to the other, said first chamber (24) being opposite to said operating end (6) and connected to a valve (26) able to drain said first chamber (24) to enable said piston (23) to slide inside said cylinder (22) when said compression force (F) is greater than said maximum compression force (Fₘₐₓ).

6. Apparatus according to claim 5, wherein said valve (26) can be adjusted to vary an opening pressure of said first chamber (24) and therefore adjust and set said maximum compression force (Fₘₐₓ).

7. Apparatus according to claim 1, wherein said force limiting means (19) comprises frame means (11) attached to said compressing flange (4), first sensor means (41) interposed between said frame means (11) and an operating end (6) of said driving means (5) to detect said compression force (F) and send a related signal to a control unit (45) of said forming apparatus (1), and second sensor means (42) for detecting a movement and/or a speed of said operating end (6) and/or of said frame means (11) along said longitudinal direction (A) and send a related signal to said control unit (45), said control unit (45) being connected to said driving means (5) and arranged to stop the latter, and said compressing flange (4), when said first sensor means (41) detects a force that is equal to an established and adjustable maximum compression force (Fₘₐₓ) and said second sensor means (42) detects that said operating end (6) and/or said frame means (11) is stationary.

8. Apparatus according to claim 7, wherein said first sensor means (41) comprises a load cell and said second sensor means (42) comprises a linear position transducer that is connected to said operating end (6) and/or to said frame means (11).

9. Apparatus according to any preceding claim, wherein said driving means (5) comprises at least one linear actuator, in particular a hydraulic linear actuator, having a working stroke (L) and provided with an operating end (6) that is movable and connected to said force limiting means (9; 19).

10. Apparatus according to any preceding claim, wherein said mandrel (3) is provided with a plurality of sectors (8) that are transversely and externally expandable toward said moulding means (2) in an extended position (E) to form on a side wall (61) of said bell joint (60) an annular seat (62) for a sealing gasket.

11. Apparatus according to claim 10, wherein said compressing flange (4) is coaxial with, and sliding on, said mandrel (3) and is provided with a upset end (4a) apt to form said annular seat (62) and said terminal front portion (63) of said joint (60) in co-operation with said sectors (8) and said moulding means (2).

12. Forming method to make by means of hot plastic deformation a bell joint (60) on an end (51) of a pipe (50) made of plastic material, by means of a forming apparatus (1) provided with moulding means (2), a mandrel (3) and a compressing flange (4), said method comprising:
- inserting said end (51), previously heated, inside said moulding means (2);
- closing said moulding means (2) around said end (51);
- inserting said mandrel (3),which is movable along a longitudinal direction (A), inside said end (51) to form in co-operation with said moulding means (2) the bell joint (60);
- moving said compressing flange (4) along said longitudinal direction (A) to abut with and compress a terminal front portion (63) of said bell joint (60) so as to upset the plastic material against said moulding means (2) and said mandrel (3);
**characterised in that** said compressing flange (4) is moved so as to abut with and compress said terminal front portion (63) with a compression force (F) that is smaller than or equal to an established and adjustable maximum compression force (Fₘₐₓ).

13. Method according to claim 12, wherein it is provided to form, on a side wall (61) of said bell joint (60), an annular seat (62) for a sealing gasket, in particular by means of a plurality of sectors (8) of said mandrel (3) that are transversely and externally expandable towards said moulding means (2) in an extended position (E).

## Patentansprüche

1. Formvorrichtung (1) um ein Glockengelenk (60) mittels heißer plastischer Verformung an einem Ende (51) eines Rohrs (50), das aus einem Plastikmaterial hergestellt ist, herzustellen, umfassend:
- Formgebungsmittel (2) zum äußeren Umschließen des Endes (51);
- einen Dorn (3), der entlang einer Längsrichtung (A) parallel zu einer Achse (X) des Rohrs (50) bewegbar ist und der in das Ende (51) einführbar ist, um in Zusammenarbeit mit den Formgebungsmitteln (2) das Glockengelenk (60) zu formen;
- zumindest einen Kompressionsflansch (4), der entlang der Längsrichtung (A) bewegbar ist, um an einen Terminal-Vorderbereich (63) des Glockengelenks (60) anzugrenzen und diesen zu komprimieren, um das Plastikmaterial gegen die Formgebungsmittel (2) und den Dorn (3) zu stauchen;
- Antriebsmittel (5) zum Bewegen des Kompressionsflansches (4) entlang der Längsrichtung (A),
**dadurch gekennzeichnet, dass** Kraftbegrenzungsmittel (9; 19) umfasst sind, die zwischen den Antriebsmitteln (5) und dem Kompressionsflansch (4) eingefügt sind, um eine Kompressionskraft (F), die während einer Kompression des Terminal-Vorderbereichs (63) von den Antriebsmitteln (5) auf den Kompressionsflansch (4) ausgeübt wird, zu begrenzen.

2. Vorrichtung gemäß Anspruch 1, wobei die Kraftbegrenzungsmittel (9) Rahmenmittel (11), die an dem Kompressionsflansch (4) befestigt sind, und Kraftanpassungsmittel (10; 20), die zwischen den Rahmenmitteln (11) und einem Bedienungsende (6) der Antriebsmittel (5) eingefügt sind, umfassen, wobei die Kraftanpassungsmittel (10; 20) geeignet sind, um das Bedienungsende (6) mit den Rahmenmitteln (11) starr zu verbinden, um den Kompressionsflansch (4) gegen den Terminal-Vorderbereich (63) zu bewegen, wenn die Kompressionskraft (F) kleiner ist, als eine festgelegte und anpassbare maximale Kompressionskraft (Fₘₐₓ) ist oder um eine Bewegung zwischen dem Bedienungsende (6) und den Rahmenmitteln (11) zu ermöglichen, um zu verhindern, dass sich der Kompressionsflansch (4) weiter entlang der Längsrichtung (A) bewegt, wenn die Kompressionskraft (F) größer ist als die maximale Kompressionskraft (Fₘₐₓ).

3. Vorrichtung gemäß Anspruch 2, wobei die Kraftanpassungsmittel (10) ein Stützelement (12), das an den Rahmenmitteln (11) befestigt ist, und elastische Mittel (13), die zwischen dem Stützelement (12) und dem Bedienungsende (6) eingefügt sind, umfassen, wobei die elastischen Mittel (13) angeordnet sind, um eine elastische Reaktionskraft (Re), die gleich der maximalen Kompressionskraft (Fₘₐₓ) ist, auf das Bedienungsende (6) auszuüben und nachgeben, wenn die Kompressionskraft (F) größer ist, als die elastische Reaktionskraft (Re), um eine entsprechende Bewegung des Bedienungsendes (6) in Bezug auf das Stützelement (12) zu ermöglichen.

4. Vorrichtung gemäß Anspruch 3, wobei die Kraftanpassungsmittel (10) Anpassungsmittel (15) umfassen, die mit dem Stützelement (12) verbunden und bewegbar sind, um die elastischen Mittel (13) gegen das Bedienungsende (6) in einer anpassenden Weise zu komprimieren, um die elastische Reaktionskraft (Re) zu variieren und dadurch die maximale Kompressionskraft (Fₘₐₓ) anzupassen und einzustellen.

5. Vorrichtung gemäß Anspruch 2, wobei die Kraftanpassungsmittel (20) einen Zylinder (22) umfassen, der an den Rahmenmitteln (11) befestigt ist und ein Fluid und einen entsprechenden Kolben (23) enthält, der an dem Bedienungsende (6) befestigt ist und in dem Zylinder (22) eine erste Kammer (24) und eine zweite Kammer (25) definiert, die einander gegenüberliegen, wobei die erste Kammer (24) dem Bedienungsende (6) gegenüber liegt und mit einem Ventil (26) verbunden ist, das ausgebildet ist, die erste Kammer (24) zu entleeren, um dem Kolben (23) zu ermöglichen, innerhalb des Zylinders (22) zu gleiten, wenn die Kompressionskraft (F) größer ist, als die maximale Kompressionskraft (Fₘₐₓ).

6. Vorrichtung gemäß Anspruch 5, wobei das Ventil (26) angepasst werden kann, um einen Öffnungsdruck der ersten Kammer (24) zu variieren und dadurch die maximale Kompressionskraft (Fₘₐₓ) anzupassen und einzustellen.

7. Vorrichtung gemäß Anspruch 1, wobei die Kraftbegrenzungsmittel (19) Rahmenmittel (11), die an dem Kompressionsflansch (4) befestigt sind, erste Sensormittel (41), die zwischen den Rahmenmitteln (11) und einem Bedienungsende (6) der Antriebsmittel (5) eingefügt sind, um die Kompressionskraft (F) zu detektieren und ein entsprechendes Signal an eine Steuereinheit (45) der Formvorrichtung (1) zu senden, und zweite Sensormittel (42) um eine Bewegung und/oder eine Geschwindigkeit des Bedienungsendes (6) und/oder der Rahmenmittel (11) entlang der Längsrichtung (A) zu detektieren und ein entsprechendes Signal an die Steuereinheit (45) zu senden, umfassen, wobei die Steuereinheit (45) mit den Antriebsmitteln (5) verbunden ist und angeordnet ist, letztere und den Kompressionsflansch (4) zu stoppen, wenn die ersten Sensormittel (41) eine Kraft detektieren, die gleich einer festgelegten und anpassbaren maximalen Kompressionskraft (Fₘₐₓ) ist, und die zweiten Sensormittel (42) detektieren, dass das Bedienungsende (6) und/oder die Rahmenmittel (11) stationär sind.

8. Vorrichtung gemäß Anspruch 7, wobei die ersten Sensormittel (41) eine Lastzelle umfassen und die zweiten Sensormittel (42) einen linearen Positionsmesswandler umfassen, der mit dem Bedienungsende (6) und/oder den Rahmenmitteln (11) verbunden ist.

9. Vorrichtung gemäß jedem vorhergehenden Anspruch, wobei die Antriebsmittel (5) zumindest einen Linearaktuator, insbesondere einen hydraulischen Linearaktuator, umfassen, der einen Arbeitshub (L) aufweist und mit einem Bedienungsende (6) versehen ist, das bewegbar und mit den Kraftbegrenzungsmitteln (9; 19) verbunden ist.

10. Vorrichtung gemäß jedem vorhergehenden Anspruch, wobei der Dorn (3) mit einer Mehrzahl von Sektoren (8) versehen ist, die zu den Formgebungsmitteln (2) hin in einer erweiterten Position (E) transversal und nach außen erweiterbar sind, um an einer Seitenwand (61) des Glockengelenks (60) einen ringförmigen Sitz (62) für eine Dichtung zu formen.

11. Vorrichtung gemäß Anspruch 10, wobei der Kompressionsflansch (4) mit dem Dorn (3) koaxial ist und daran gleitet und mit einem gestauchten Ende (4a) versehen ist, das ausgebildet ist, den ringförmigen Sitz (62) und den Terminal-Vorderbereich (63) des Gelenks (60) in Zusammenarbeit mit den Sektoren (8) und den Formgebungsmitteln (2) zu formen.

12. Formverfahren, um ein Glockengelenk (60) mittels heißer plastischer Verformung an einem Ende (51) eines Rohrs (50), das aus einem Plastikmaterial hergestellt ist, mittels einer Formvorrichtung (1), die mit Formgebungsmitteln (2), einem Dorn (3) und einem Kompressionsflansch (4) versehen ist, herzustellen, wobei das Verfahren umfasst:
- Einführen des Endes (51), das vorher aufgeheizt wurde, in die Formgebungsmittel (2);
- Schließen der Formgebungsmittel (2) um das Ende (51) herum;
- Einführen des Dorns (3), der entlang einer Längsrichtung (A) bewegbar ist, in das Ende (51), um in Zusammenarbeit mit den Formgebungsmitteln (2) das Glockengelenk (60) zu formen;
- Bewegen des Kompressionsflansches (4) entlang der Längsrichtung (A), um an einen Terminal-Vorderbereich (63) des Glockengelenks (60) anzugrenzen und diesen zu komprimieren, um das Plastikmaterial gegen die Formgebungsmittel (2) und den Dorn (3) zu stauchen;
**dadurch gekennzeichnet, dass** der Kompressionsflansch (4) bewegt wird, um an den Terminal-Vorderbereich (63) anzugrenzen und diesen mit einer Kompressionskraft (F) zu komprimieren, die kleiner oder gleich einer festgelegten und anpassbaren maximalen Kompressionskraft (Fₘₐₓ) ist.

13. Verfahren gemäß Anspruch 12, wobei es bereitgestellt ist, an einer Seitenwand (61) des Glockengelenks (60) einen ringförmigen Sitz (62) für eine Dichtung zu formen, insbesondere mittels einer Mehrzahl von Sektoren (8) des Dorns (3), die zu den Formgebungsmitteln (2) hin in einer erweiterten Position (E) transversal und nach außen erweiterbar sind.

## Revendications

1. Appareil de formation (1) pour fabriquer, au moyen d'une déformation plastique à chaud, un joint à emboîtement (60) sur une extrémité (51) d'un tuyau (50) constitué d'un matériau plastique, comprenant :
- un moyen de moulage (2) pour renfermer extérieurement ladite extrémité (51) ;
- un mandrin (3) qui est mobile dans un sens longitudinal (A) parallèle à un axe (X) dudit tuyau (50) et qui est insérable à l'intérieur de ladite extrémité (51) pour former, en coopération avec ledit moyen de moulage (2), ledit joint à emboîtement (60) ;
- au moins une bride de compression (4) mobile dans ledit sens longitudinal (A) pour venir en butée contre et compresser une portion avant terminale (63) dudit joint à emboîtement (60) de manière à refouler le matériau plastique contre ledit moyen de moulage (2) et ledit mandrin (3) ;
- un moyen d'entraînement (5) pour déplacer ladite bride de compression (4) dans ledit sens longitudinal (A) ;
**caractérisé en ce qu'**il comprend un moyen de limitation de force (9 ; 19) qui est interposé entre ledit moyen d'entraînement (5) et ladite bride de compression (4) pour limiter une force de compression (F) qui est exercée par ledit moyen d'entraînement (5) sur ladite bride de compression (4) au cours d'une compression de ladite portion avant terminale (63).

2. Appareil selon la revendication 1, dans lequel ledit moyen de limitation de force (9) comprend un moyen de cadre (11) attaché à ladite bride de compression (4) et un moyen d'ajustement de force (10 ; 20) interposé entre ledit moyen de cadre (11) et une extrémité opérationnelle (6) dudit moyen d'entraînement (5), ledit moyen d'ajustement de force (10 ; 20) étant apte à relier rigidement ladite extrémité opérationnelle (6) audit moyen de cadre (11) de manière à déplacer ladite bride de compression (4) contre ladite portion avant terminale (63) lorsque ladite force de compression (F) est inférieure à une force de compression maximale établie et ajustable (Fₘₐₓ) ou pour permettre un déplacement entre ladite extrémité opérationnelle (6) et ledit moyen de cadre (11), de manière à empêcher ladite bride de compression (4) de continuer à se déplacer dans ledit sens longitudinal (A), lorsque ladite force de compression (F) est supérieure à ladite force de compression maximale (Fₘₐₓ).

3. Appareil selon la revendication 2, dans lequel ledit moyen d'ajustement de force (10) comprend un élément de support (12) attaché auxdits moyen de cadre (11) et moyen élastique (13) interposés entre ledit élément de support (12) et ladite extrémité opérationnelle (6), ledit moyen élastique (13) étant agencé pour exercer, sur ladite extrémité opérationnelle (6), une force de réaction élastique (Re) qui est égale à ladite force de compression maximale (Fₘₐₓ) et cédant lorsque ladite force de compression (F) est supérieure à ladite force de réaction élastique (Re) de manière à permettre un déplacement lié de ladite extrémité opérationnelle (6) par rapport audit élément de support (12).

4. Appareil selon la revendication 3, dans lequel ledit moyen d'ajustement de force (10) comprend un moyen d'ajustement (15) qui est relié audit élément de support (12) et mobile pour compresser, de manière ajustable, ledit moyen élastique (13) contre ladite extrémité opérationnelle (6) afin de faire varier ladite force de réaction élastique (Re) et donc d'ajuster et de régler ladite force de compression maximale (Fₘₐₓ).

5. Appareil selon la revendication 2, dans lequel ledit moyen d'ajustement de force (20) comprend un cylindre (22) attaché audit moyen de cadre (11) et contenant un fluide et un piston correspondant (23) qui est attaché à ladite extrémité opérationnelle (6) et définit, dans ledit cylindre (22), une première chambre (24) et une seconde chambre (25) qui sont à l'opposé l'une de l'autre, ladite première chambre (24) étant à l'opposé de ladite extrémité opérationnelle (6) et reliée à une vanne (26) capable de drainer ladite première chambre (24) pour permettre audit piston (23) de coulisser à l'intérieur dudit cylindre (22) lorsque ladite force de compression (F) est supérieure à ladite force de compression maximale (Fₘₐₓ).

6. Appareil selon la revendication 5, dans lequel ladite vanne (26) peut être ajustée pour faire varier une pression d'ouverture de ladite première chambre (24) et donc d'ajuster et de régler ladite force de compression maximale (Fₘₐₓ).

7. Appareil selon la revendication 1, dans lequel ledit moyen de limitation de force (19) comprend un moyen de cadre (11) attaché à ladite bride de compression (4), un premier moyen de capteur (41) interposé entre ledit moyen de cadre (11) et une extrémité opérationnelle (6) dudit moyen d'entraînement (5) pour détecter ladite force de compression (F) et envoyer un signal lié à une unité de commande (45) dudit appareil de formation (1), et un second moyen de capteur (42) pour détecter un déplacement et/ou une vitesse de ladite extrémité opérationnelle (6) et/ou dudit moyen de cadre (11) dans ledit sens longitudinal (A) et envoyer un signal lié à ladite unité de commande (45), ladite unité de commande (45) étant reliée audit moyen d'entraînement (5) et agencée pour l'arrêter, et à ladite bride de compression (4), lorsque ledit premier moyen de capteur (41) détecte une force égale à une force de compression maximale établie et ajustable (Fₘₐₓ) et ledit second moyen de capteur (42) détecte que ladite extrémité opérationnelle (6) et/ou ledit moyen de cadre (11) est/sont immobiles.

8. Appareil selon la revendication 7, dans lequel ledit premier moyen de capteur (41) comprend un dynamomètre et ledit second moyen de capteur (42) comprend un transducteur de position linéaire qui est relié à ladite extrémité opérationnelle (6) et/ou audit moyen de cadre (11).

9. Appareil selon l'une quelconque des revendications précédentes, dans lequel ledit moyen d'entraînement (5) comprend au moins un actionneur linéaire, en particulier un actionneur linéaire hydraulique, ayant une course de travail (L) et pourvu d'une extrémité opérationnelle (6) qui est mobile et reliée audit moyen de limitation de force (9 ; 19).

10. Appareil selon l'une quelconque des revendications précédentes, dans lequel ledit mandrin (3) est pourvu d'une pluralité de secteurs (8) qui sont extensibles transversalement et extérieurement vers ledit moyen de moulage (2) à une position étendue (E) pour former, sur une paroi latérale (61) dudit joint à emboîtement (60), un siège annulaire (62) pour une garniture d'étanchéité.

11. Appareil selon la revendication 10, dans lequel ladite bride de compression (4) est coaxiale audit mandrin (3) et coulisse sur celui-ci, et est pourvue d'une extrémité de refoulement (4a) apte à former ledit siège annulaire (62) et ladite portion avant terminale (63) dudit joint (60) en coopération avec lesdits secteurs (8) et ledit moyen de moulage (2).

12. Procédé de formation pour fabriquer, au moyen d'une déformation plastique à chaud, un joint à emboîtement (60) sur une extrémité (51) d'un tuyau (50) constitué d'un matériau plastique, au moyen d'un appareil de formation (1) pourvu d'un moyen de moulage (2), d'un mandrin (3) et d'une bride de compression (4), ledit procédé comprenant :
- l'insertion de ladite extrémité (51), précédemment chauffée, à l'intérieur dudit moyen de moulage (2) ;
- la fermeture dudit moyen de moulage (2) autour de ladite extrémité (51) ;
- l'insertion dudit mandrin (3), qui est mobile dans un sens longitudinal (A), à l'intérieur de ladite extrémité (51) pour former, en coopération avec ledit moyen de moulage (2), le joint à emboîtement (60) ;
- le déplacement de ladite bride de compression (4) dans ledit sens longitudinal (A) pour venir en butée contre et compresser une portion avant terminale (63) dudit joint à emboîtement (60) de manière à refouler le matériau plastique contre ledit moyen de moulage (2) et ledit mandrin (3) ;
**caractérisé en ce que** ladite bride de compression (4) est déplacée de manière à venir en butée contre et compresser ladite portion avant terminale (63) avec une force de compression (F) qui est inférieure ou égale à une force de compression maximale établie et ajustable (Fₘₐₓ).

13. Procédé selon la revendication 12, dans lequel il est prévu de former, sur une paroi latérale (61) dudit joint à emboîtement (60), un siège annulaire (62) pour une garniture d'étanchéité, en particulier au moyen d'une pluralité de secteurs (8) dudit mandrin (3) qui sont extensibles transversalement et extérieurement vers ledit moyen de moulage (2) à une position étendue (E).
